# EUROPÄISCHE PATENTSCHRIFT

(11) **EP 2 059 371 B1**
(45) Veröffentlichungstag und Bekanntmachung des Hinweises auf die Patenterteilung: **07.03.2012**
(21) Anmeldenummer: 07802034.4
(22) Anmeldetag: 31.08.2007
(51) Int. Cl.: B26B 13/06, B26B 13/22, H02G 1/00, B26B 13/28, B25B 7/06, B26B 13/20, B23D 29/02

(54) **DREHLAGERUNG FÜR KABELSCHNEIDER, SCHEREN ODER BLECHSCHEREN**
PIVOT BEARING FÜR CABLE CUTTERS, SHEARS OR SHEET SHEARS
PALIER ROTATIF POUR COUPES-CÂBLES, CISAILLES OU CISAILLES À TOLE

(30) Priorität: 05.09.2006 IT BZ20060040
(43) Veröffentlichungstag der Anmeldung: 20.05.2009
(73) Patentinhaber: INTERCABLE SRL, I-39031 Brunico (Bolzano) (IT)
(72) Erfinder: MUTSCHLECHNER, Klaus,, 39031 Stegona/Brunico (IT)
(74) Vertreter: Oberosler, Ludwig
(86) Internationale Anmeldenummer: PCT/EP2007/007616
(87) Internationale Veröffentlichungsnummer: WO 2008/028596

(56) Entgegenhaltungen:
- EP-A- 0 032 484
- DE-A1- 19 532 825
- DE-U1- 8 703 303
- DE-U1- 9 110 772
- DE-U1- 9 310 153
- DE-U1- 9 310 153
- GB-A- 1 377 418
- GB-A- 2 100 168
- GB-A- 2 181 687
- US-A- 3 922 783
- US-A1- 2002 073 814
- US-A1- 2006 112 567

## Beschreibung

Insbesondere an Scheren zum Schneiden von Blechen ist es bekannt, dass die Lagerung der Klingen, die Einstellung des Spieles zwischen den Schneiden, bzw. die Einstellung des Anpressdruckes einer Klinge an die andere, gemäß der Achse des Lagerelementes bestehend aus einem Lagerzapfen mit Gewindeende und Sechskantmutter, ermöglicht. An Scheren für den Hausgebrauch, an Gartenscheren oder an Handwerkerscheren ist die Beseitigung des Spieles zwischen den Klingen meistens nicht vorgesehen und das, bei Montage vorbestimmte, Spiel ist durch das Verhindern der Verdrehung zwischen Lagerzapfen und Gewindemutter, bzw. zwischen dem Lagerzapfen und der entsprechenden Gewindebohrung an einer der Klingen, gesichert. Im Falle der Einstell- oder Verstellmöglichkeit des Spieles zwischen den Klingen, ist diese durch die Möglichkeit des Ein- oder Ausschraubens des Lagerzapfens gegeben, wobei die Arretierung des selben durch die Reibung zwischen dem Gewindeende und einem spezifischen angebrachtem Element oder einem Abdeckungselement erreicht wird.

Eine gattungsgemäße Drehlagerung ist bekannt aus DE 93 10 153 U1.

Es ist weiters auch die Arretierung mittels Gewindebuchse mit einem Abschnitt weicher Abflachungen aufweist bekannt in welche ein Lagerzapfen mit Auflagekopf eingeschraubt ist so dass die drehbare Lagerung der ersten Klinge mit kreisrunder Bohrung und die nicht drehbare Lagerung der zweiten Klinge mit einer Bohrung welche den Abflachungen an besagter Buchse entspricht, erreicht wird. Diese Lösung sieht weiters vor, dass zwischen der Buchse und dem Lagerzapfen Elemente wirken um eine Reibung zu erzeugen wodurch die Einschraubposition festgehalten wird.

Sämtliche spezifische oder kombinierte Schneidwerkzeuge weisen, insbesonders im Fall von Mehrzweckklingen, den Nachteil auf dass, infolge des Gebrauches, das Spiel und/oder der Anpressdruck zwischen den Klingen nicht mehr jener ist welcher als ideal beim Zusammenbau vorgesehen worden war und somit ist bei der Ausführung der zwei oder der mehreren vorgesehenen Funktionen, nicht mehr die einwandfreie Funktionstüchtigkeit gesichert.

Die Erfindung stellt sich die Aufgabe eine Drehlagerung für Scheren Kabelschneider und dergleichen von der Art welche insbesondere für Elektriker geeignet ist zu schaffen welche eine mühelose und wiederholte Einstellung und die Beibehaltung des Spieles, bzw des Anpressdruckes zwischen den beiden Klingen, ermöglicht.

Die wichtigste Bedingung für die einwandfreie und dauerhafte Arbeitsweise der Schere mit erfindungsgemäßen Merkmalen besteht darin, dass die Klingen selbst kräftig ausgeführt sind und dass die Drehlagerung zwischen den zwei Klingen relativ präzise und dass deren Spiel in axialer Richtung mühlos und dauerhaft einstellbar ist.

Um dies zu erreichen schlägt die Erfindung die Verbesserung der bekannten Lagerung mittels Gewindebuchse welche an einem der Enden einen vorestehenden Auflagekragen aufweist und in welche ein entsprechender Gewindezapfen mit Auflagekopf einschraubbar ist, vor. Diese Lagerbuchse kann erfindungsgemäß über die gesamte Länge eine zylindrische Außenfläche aufweisen um in entsprechenden, an beiden Klingen identischen Bohrungen eingesetzt zu werden, diese Lagerbuchse kann auch von bekannter Art sein, wobei sie am Ende welches dem Ende mit vorstehendem Auflagekragen gegenüberliegt mindestens eine Abflachung aufweist welche mit mindestens einer entsprechenden Erhebung im Inneren der Lagerbohrung weiche an der zweiten Scherenklinge vorgesehen ist so zusammenwirkt, dass eine gegenseitige Verdrehung zwischen der Buchse und der besagten zweiten Scherenklinge verhindert wird. Im Falle einer erfindungsgemäßen Lagerbuchse ohne Abflachungen ist diese an dem, mit vorstehendem Auflagekragen versehenem Ende, gegenüberliegenden Ende mit mindestens einem sich axial erstreckenden Vorsprung versehen welcher in einen entsprechenden Sitz an einer Beilegscheibe unter dem Auflagekopf des Lagerbolzens mit Gewinde eingesetzt ist, wobei diese Beilegscheibe mittels äußerer Ausnehmung in welche ein, mit der Klinge verbundener, Vorsprung ragt, gegen Verdrehung gesichert ist.

Natürlich kann die besagte äußere Ausnehmung durch einen äußeren Vorsprung ersetzt werden wobei dieser in einen entsprechenden Sitz an der Klinge oder as der Kunststoffverkleidung des Betätigungssarms eingreift.

Sei es durch diese letztere Lösung oder durch Einsatz einer bekannten Buchse welche mindestens eine Abflachung aufweist, wird immer das Verdrehen der Lagerbuchse bezüglich jener Scherenklinge verhindert welche als zweite eingesetzt wird.

Die mühelose Einstellung des axialen Spieles zwischen den Klingen im Bereich der gegenseitigen Lagerung geschieht erfingsungsgemäß indem am Kopf des Lagerbolzens mit Gewinde, bzw. an der Kunststoffverkleidung des Kopfes, ein Sitz für das Ansetzen eines einfachen Werkzeuges (Schraubendreher, Inbusschlüssel) und/oder einer Münze vorgesehen ist, wobei die Arretierung oder das Bremsen des Lagerbolzens in der Einstellposition dadurch erfolgt dass durch Drehung am Kopf des Lagerbolzens oder an der Buchse die Lockerung oder/und die Festlegung der Lagerung erfolgt. Im Fall von Scheren, Kabelschneider oder dergleichen welche insbesondere für Elektriker geeignet sind, sind diese mit bekannten Betätigungsgriffen aus elektrisch isolierendem Kunststoff oder mit Kunststoffverkleidung ausgestattet, auch der Lagerbereich ist vollständig abisoliert. Die Auflageteile der Lagerbuchse und des Gewindezapfens, bzw. der metallische Kopf des Lagerbolzens, können durch kleine Deckel aus isolierendem Werkstoff abgedeckt sein.

Die Bremswirkung am Lagerbolzen mit Gewinde kann auf bekannte Art durch einen Ring aus elastischem Kunststoff bewirkt werden welcher mit "selbstbtockierender" Wirkung in einer entsprechenden Rille innen in der Gewindebohrung der Lagerbuchse eingesetzt ist, oder auch dadurch bewirkt werden, dass der Lagerbolzen mit einem bekannten elastischen Ansatz versehen ist welcher an der Innenfläche der Buchse reibt.

Die Arretienrvirkung am Kopf des Lagerbolzens mit Gewinde kann erfindungsgemäß durch einen isolierenden Deckel bewirkt werden welcher auf, den Kopf des Lagerbolzens aufgeschnappt ist und formschlüssig mit dem entsprechenden Sitz an der isolierenden Abdeckung des entsprechenden Scherenarmes eingesetzt ist.

Im Falle dass der Kopf des Lagerbolzens mit Kunststoff verkleidet ist eignet sich dieser erfindungsgemäß für verschiedene bewegliche Arretiermechanismen welche in die Kunststoffverkleidung des Kopfes eingebettet sind und auf die Innenfläche des Sitzes für den Lagerbolzenkopf wirken welcher in der Kunststoffverkleidung des Scherenarms vorgesehen ist. Diese Arretiermechanismen können jedoch erfindungsgemäß auch an einem der Scherenarme vorgesehen sein und auf den metallischen oder mit Kunststoff verkleideten Kopf des Lagerbolzens mit Gewinde wirken.

Die Erfindung wird anschließend anhand einiger in den beigelegten Zeichnungen schematisch dargestellter vorzuziehender Ausführungsbeispiele einer erfindungsgemäßen Schere mit integriertem Kabalschneider näher erklärt, dabei erfüllen diese Zeichnungen rein erklärenden, nicht begrenzenden Zweck.

Die Fig. 1 zeigt die Draufsicht einer erfindungsgemäßen Schere mit geschlossenen Betätigungsarmen und Klingen.

Die Fig. 2 zeigt in Draufsicht die selbe in Fig. 1 dargestellte Schere mit gespreizten Betätigungsarmen und Klingen.

Die Fig. 3 zeigt einen Querschnitt gemäß der in Fig. 1 gezeigten Schnittfläche weiche die Lagerachse beinhaltet, der Kopf des Lagerbolzens ist mit Kunststoff verkleiden

Die Fig. 4 zeigt in vergrößertem Maßstab, teilweise in Schnittdarstellung, einen Arretiermechanismus mit federbelosteter Kugel welcher im Kopf des Lagerbolzens einer erfindungsgemäßen Schere vorgesehen ist, wobei die Kugel auf die innenfläche des Sitzes des Kopfes am Betätigungsarm der Schere wirkt.

Die Fig. 5 zeigt in vergrößertem Maßstab, teilweise in Schnittdarstellung, einen Arretiermechanismus mit verschiebbarer federbelosteter Arretierklinke welche auf den Kopf des Lagerbolzens einer erfindungsgemäßen Schere wirkt.

Die Fig. 6 zeigt in vergrößertem Maßstab teilweise in Schnittdarstellung, einen Arretiermechanismus mit drehbarer Arretierklinke welche auf den Kopf des Lagerbolzens einer erfindungsgemäßen Schere wirkt.

Die Fig. 7 zeigt in vergrößertem Maßstab, teilweise in Schnittdarstellung, eine Arretiervorrichtung welche aus einem Deckel besteht welcher in formschlüssiger Verbindung auf den sechskantigen Kopf des Lagerbolzens aufgesteckt ist und in formschlüssiger Verbindung in einen entsprechenden Sitz in der isolierenden Verkleidung des entsprechenden Betätlgungsarmes der Schere eingesetzt ist wodurch das Arretieren des Kopfes des Lagerbolzens in Bezug auf den Betätigungsarm der Schere erfolgt.

Die Fig. 7a zeigt den Querschnitt durch die in Fig. 7 gezeigte Drehlagerung gemäß einer Schnittebene welche die Lagerachse beinhaltet.

Die Fig. 8 zeigt in vergrößertem Maßstab, teilweise in Schnittdarstellung, einen Arretiermechanismus bestehend aus einer ausgeformten Beilagscheibe welche einerseits mit dem Ende der Gewindebuchse der Drehlagerung und anderseits mit dem entsprechenden Betätigungsarm der Schere verbunden ist.

Die Fig. 8a zeigt den Querschnitt durch die in Fig. 8 gezeigt Drehlagerung gemäß einer Schnittebene welche die Lagerachse beinhaltet.

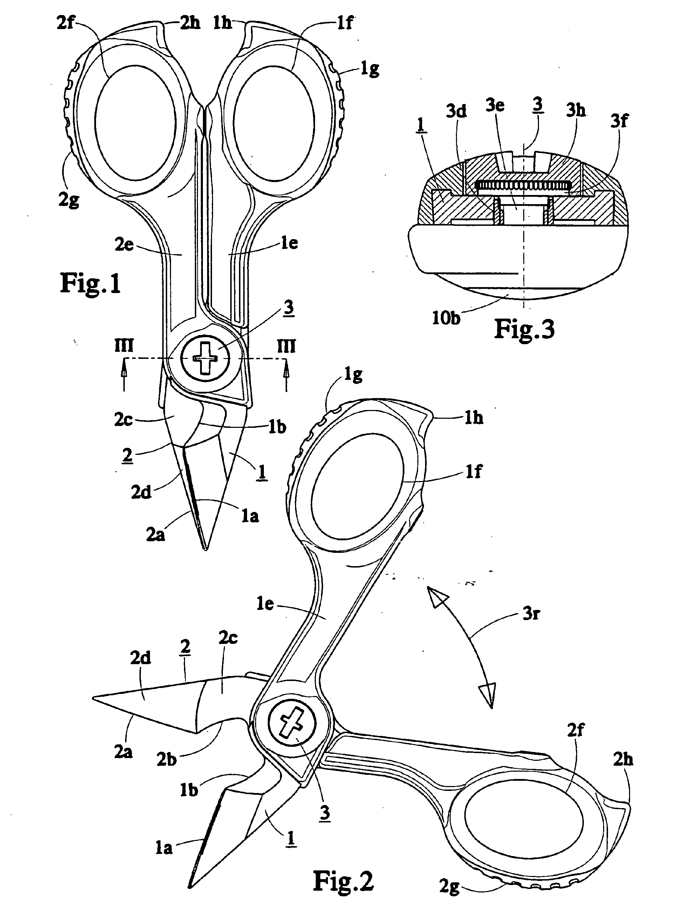

Die Schere besteht aus zwei eventuell identischen Betätigungsarmen 1e, 2e mit eventuell identischen Klingen 1 und 2 welche mit Drehlagerung 3 versehen sind-Die Betätigungsarme 1e, 2e sind vorteilhafterweise aus Kunststoff welcher die metallischen Ansätze der Klingen 1, 2 überdeckt, die Klingen weisen eine Lagerbohrung auf welche von einer Lagerbuchse 3a durchdrungen ist welche einen Auflagekragen 3b, einen rohrförmigen Teil mit zylindrischer Außenfläche 3c und einem rohrförmigen Teil mit mindestens einer äußeren Abflachung 3d aufweist. Der Teil mit zylindrischer Außenfläche ist verdrehbar in eine entsprechende Bohrung an der Klinge 2 eingesetzt während der Teil mit äußerer Abflachung 3d nicht verdrehbar in eine entsprechende Bohrung mit entsprechende ausgeformten Anschlag an der Klinge 1 eingesetzt ist. Der Lagerbolzen 3e mit Gewinde ist in die Gewindebohrung an der Lagerbuchse 3a eingeschraubt, dieser Lagerbolzen weist einen mit isolierendem Kunststoff 3h abgedeckten Auflagekopf 3f auf, die Kunststoffabdeckung weist einen Sitz auf um die Einstellung mittels Werkzeug oder Münze (Fig. 3) zu erleichtern. Der vorstehende Auflagekragen 3b der Lagerbuchse 3a kann durch einen kleinen Deckel aus isolierendem Werkstoff 10, 10a, 10b abgedeckt sein.

Erfindungsgemäß kann der Kopf 3f des mit Kunststoff 3h abgedeckten Lagerbolzens 3e mit mindestens einer Arretierkugel 4 versehen sein welche radial von einer Feder 4a beaufschlagt ist um in Sitze 5a zwischen Vorsprünge 5 an der Innenfläche der entsprechenden Kunststoffverkleidung des Betätigungsarmes 1e einzugreifen. Bei Betätigung 3v des Kopfes des Bolzens 3e, z.B. mittels Münze; bis die erwünschte Einstellung der Lagerung 3 der Schere erreicht ist, wird diese durch Einschnappen der Kugel 4 in den entsprechenden Sitz zwischen zwei Vorsprüngen 5 (Fig, 4) beibehalten.

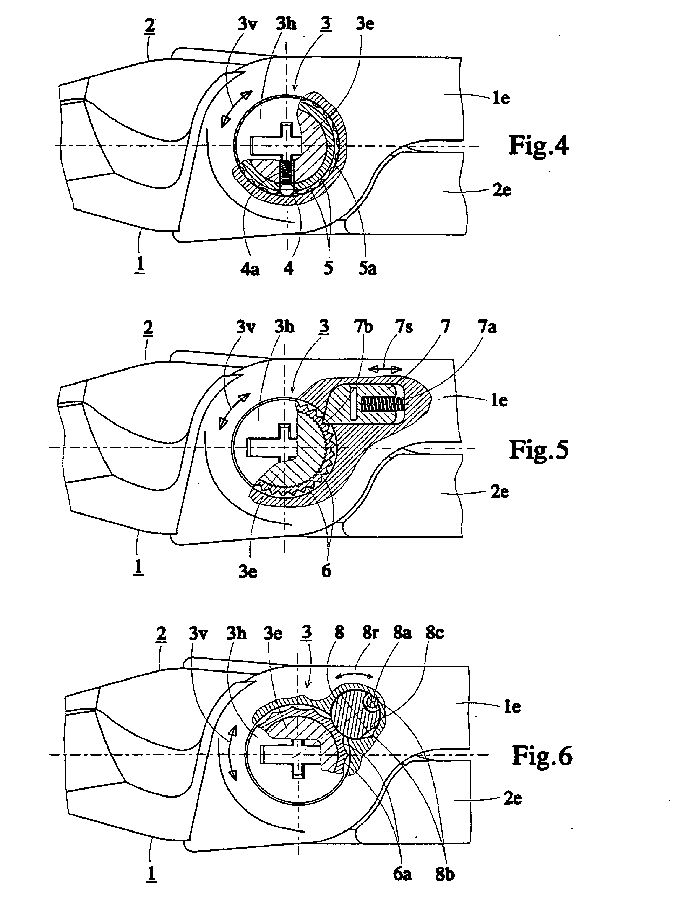

Die Arretierung der gewünschten Einstellungsposition wird erfindungsgemäß auch dadurch erreicht, dass außen am Kopf des Bolzens 3e Kerben 6 vorgesehen sind in welche die Spitze 7d einer, am Betätigungsarm 1e gegen die besagten Kerben 6 (Fig. 5) verschiebbaren 7s, Klinke 7 einrastet. Alternativ besteht die Möglichkeit außen am Kopf des Bolzens 3e, kreisbogenförmige Kerben 6a vor-zusehen in welche eine verdrehbare 8r Klinke 8 eingreifen kann welche einen Ausklinkbereich 8c und eine Kugel 8a aufweist um die Klinke 8 in der Einklinkposition, bzw. in der Ausklinkposition festzuhalten, diese Positionen werden durch Sitze 8b an der Innenfläche des Sitzes für die Klinke 8 am Betätigungsarm 1e (Fig. 6) bestimmt

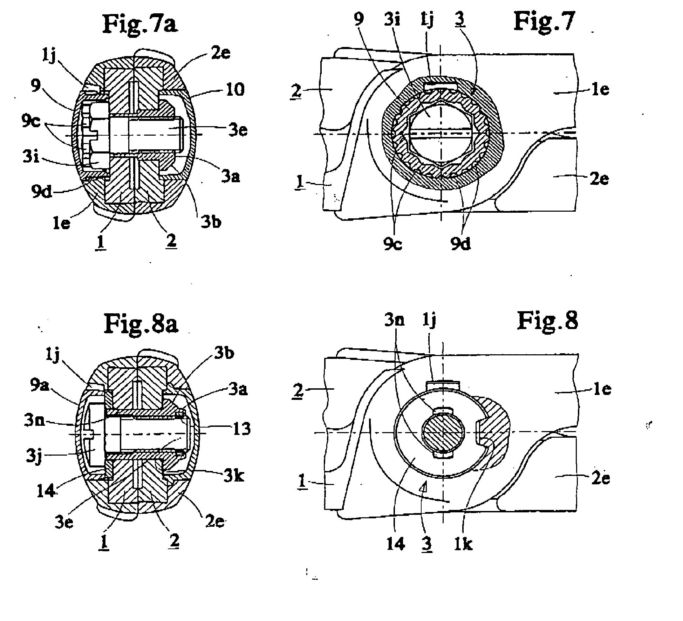

Erfindungsgemäß ist es auch möglich den Bolzen 3 zu arretieren indem dieser Bolzen mit einem Sechskantkopf 3i oder mit äußerten Anschlägen oder Vorsprüngen versehen wird an welchen durch formschlüssige Verbindung 9c ein Deckel 9 wirkt welcher wiederum in formschlusslger Verbindung 9d in den entsprechenden Sitz am Betätigungsarm 1e eingesetzt ist; der Deckel 9 ist abmontierbar indem ein Schraubendreher an der Kerbe 1 j (Fig. 7a) angesetzt wird.

Gemäß einer Weiterentwicklung des Erfindungsgedankens kann die Lagerbuchse 3a mit einem bekannten Ring 13 aus elastischem Kunststoff versehen sein welcher eine Bremswirkung in Bezug auf das Gewinde des Bolzens 3e (Fig. 8a) ausübt, in diesem Fall ist das entgegengesetzte Ende der Lagerbuchse 3a erfindungsgemäß mit axialen Vorsprüngen 3nausgestattet welche in entsprechende Kerben an eimer ausgeformten Beilagscheibe 14 eingreifen wobei diese eine äußere Kerbe aufweist um durch einen entsprechenden Vorsprung 1 k welcher von der Innenfläche des Sitzes am Betätigungsarm 1e abstent gegen Verdrehung gehalten zu werden. Der Kopf 3j wird in diesem Fall durch einen Deckel 9a ohne Vorsprünge abgedeckt, dieser kann durch einen im der Kerbe 1j am Deckel 1a angesetzten Schraubendreher abmontiert werden. In diesem Fall hat die Buchse 3a, ab dem Auflagekragen 3b, im Richtung Vorsprünge 3n, zylindrische Außenform und die Bohrungen an beiden Klingen 1, 2 sind identisch und zylindrisch.

## Patentansprüche

1. Drehlagerung für Kabelschneider, Scheren oder Blechschere mit Betätigungsarmen (1e, 2e) ausgestattet mit Klingen von der Art mit Lagerbuchse (3a) in welche ein Lagerbölzen (3e) eingeschraubt ist um die beiden Klingen (1, 2) zwischen einem Auflagekragen (3b der Buchse (3a) und dem Kopf (3f, 3i, 3j) des Bolzens zusammen zudrücken, **dadurch gekennzeichnet, dass** die Verdrehung (3v) des Kopfes (3i) des Lagerbolzens (3e) durch die Anbringung eines Deckels (9) arretiert wird welcher mit der Innenseite formschlüssig (9c) auf den sechskantigen oder mit eigenen radialen Vorsprüngen oder Ausnehmungen versehenen Kopf (3i) aufgesteckt wird während die Außenseite, insbesondere die äußere Umfangsfläche des Deckels (9) formschtüssig (9d) verdrechischer in einen entsprechenden Sitz an einer Kunststoffverkleidung eines entsprechenden Betätigungsarmes (1e) des Werkzeuges einsetzbar ist.

2. Drehlagerung gemäß Anspruch 1, **dadurch gekennzeichnet, dass** die Verdrehung (3v) des Kopfes des Lagerbolzens (3e) durch federbelastete Kugeln (4, 8a) welche im Kopf (3h) des Lagerbolzens (3e) oder in der Aufnahme dieses Kopfes an der Kunsfistoffverkleidung der Betätigungsarme (1e, 2e) vorgesehen sind arretierbar ist, wobei diese in einen der Sitze (5a, 6,6a) eindringen welche in der Aufnahme für den Kopf des Lagerbolzens, bzw. als Kerben (6,6a) außen am Kopf, vorgesehen sind oder federbelasteter Klinken (7,8) welche zwischen dem besagten Kopf und dem entsprechenden Betätigungsarm (1e) der Schere oder des Werkzeuges wirken, wobei die besagten Verrichtungen oder Klinken (7,8) zwecks Freigabe der Verdrehung (3v) des Bolzens (3e) ausklinkbar (7s, 8r) sind.

3. Drehlagerung gemäß Anspruch 1, **dadurch gekennzeichnet, dass** die Verdrehung des Kopfes (3j) des Lagerbolzens (3e) durch axiale Vorsprünge (3n) welche in entsprechende Kerben an einer vom Kopf (3j) gehaltenen Beilagscheibe (14) eingreifen gegen Verdrehung gesichert ist, wobei diese Beilagscheibe (14) ihrerseits gegen Verdrehung gesichert ist indem sie mit einer äußeren Kerbe versehen ist in welche ein entsprechender, von der Innenfläche des Sitzes am Betätigungsarm (1e) abstehenden Vorsprung (1k), eingreift, wobei die Lagerbuchse 3a an ihrem entgegengesetzten Ende mit einem Ring (13) aus elastischen Kunststoff versehen ist, welcher eine Bremswirkung in Bezug auf des Gewinde des Bolzens (3e) ausübt.

## Claims

1. Rotary mounting for cable cutters, shears or sheet-metal shears, having actuating arms (1e, 2e) equipped with blades of the type having a bearing bushing (3a) into which a bearing pin (3e) is screwed in order to press the two blades (1, 2) together between a supporting collar (3b) of the bushing (3a) and the head (3f, 3i, 3j) of the pin, **characterized in that** the rotation (3v) of the head (3i) of the bearing pin (3e) is stopped by the attachment of a cover (9), which is plugged in a form-fitting manner (9c) by way of its inner side onto the head (3i), which is hexagonal or has separate radial protrusions or recesses, while the outer side, in particular the outer circumferential surface of the cover (9), is insertable in a form-fitting manner (9d), such that it cannot rotate, into a corresponding seat on a plastic lining of a corresponding actuating arm (1e) of the tool.

2. Rotary mounting according to Claim 1, **characterized in that** the rotation (3v) of the head of the bearing pin (3e) is stoppable by spring-loaded balls (4, 8a), which are provided in the head (3h) of the bearing pin (3e) or in the holder for this head on the plastic lining of the actuating arms (1e, 2e), wherein these penetrate into one of the seats (5a, 6, 6a) which are provided in the holder for the head of the bearing pin, or as notches (6, 6a) on the outside of the head, or by means of spring-loaded catches (7, 8), which act between said head and the corresponding actuating arm (1e) of the shears or of the tool, wherein said devices or catches (7, 8) are releasable (7s, 8r) in order to enable the rotation (3v) of the pin (3e).

3. Rotary mounting according to Claim 1, **characterized in that** the rotation of the head (3j) of the bearing pin (3e) is secured against rotation by axial protrusions (3n) which engage in corresponding notches on a washer (14) held by the head (3j), wherein this washer (14) is for its part secured against rotation by being provided with an external notch, into which there engages a corresponding protrusion (1k), which projects from the inner surface of the seat on the actuating arm (1e), wherein the bearing bushing (3a) is provided at its opposite end with a ring (13) composed of elastic plastic, which exerts a braking action in relation to the thread of the pin (3e).

## Revendications

1. Palier rotatif pour coupes-câbles, cisailles ou cisailles à tôle, munis de bras d'actionnement (1 e, 2e), avec des lames, du type avec coussinet (3a), dans lequel un boulon de coussinet (3e) est vissé pour serrer les deux lames (1, 2) entre une collerette d'appui (3b) du coussinet (3a) et la tête (3f, 3i, 3j) du boulon, **caractérisé en ce que** la rotation (3v) de la tête (3i) du boulon de coussinet (3e) est arrêtée par la pose d'un capuchon (9), lequel est monté avec le côté intérieur, de façon solidaire (9c), sur la tête (3i) munie d'évidements ou de propres saillies radiales ou hexagonale, tandis que le côté extérieur, en particulier la surface périphérique extérieure du capuchon (9), peut être inséré de façon solidaire (9d), bloqué en rotation, dans un siège correspondant au niveau d'un revêtement en matière plastique d'un bras d'actionnement correspondant (1e) de l'outil.

2. Palier rotatif selon la revendication 1, **caractérisé en ce que** la rotation (3v) de la tête du boulon de coussinet (3e) peut être arrêtée par des billes contraintes par ressort (4, 8a), lesquelles sont prévues dans la tête (3h) du boulon de coussinet (3e) ou dans le logement de cette tête au niveau du revêtement en matière plastique des bras d'actionnement (1e, 2e), ceux-ci pénétrant dans un des sièges (5a, 6, 6a), lesquels sont prévus dans le logement pour la tête du boulon de coussinet ou en tant qu'encoches (6, 6a) à l'extérieur, au niveau de la tête ou à l'aide de lames contraintes par ressort (7, 8), lesquelles agissent entre ladite tête et le bras d'actionnement correspondant (1e) de la cisaille ou de l'outil, lesdits dispositifs ou lames (7, 8) pouvant être désengagés (7s, 8n) pour déblocage de la rotation (3v) du boulon (3e).

3. Palier rotatif selon la revendication 1, **caractérisé en ce que** la rotation de la tête (3j) du boulon de coussinet (3e) est protégée contre la rotation par des saillies (3n) axiales, lesquelles sont en prise dans des encoches correspondant au niveau d'une rondelle de calage (14) maintenue par la tête (3j), cette rondelle de calage (14) étant de son côté protégée contre toute rotation, dans laquelle elle est munie d'une encoche extérieure, dans laquelle une saillie (1 k) correspondant, espacée de la surface interne du siège au niveau du bras d'actionnement (1e) est en prise, le coussinet (3a) étant muni au niveau de son extrémité opposée d'une bague (13) en matière plastique élastique, laquelle exerce un effet de freinage par rapport au filetage du boulon (3e).
